# EUROPEAN PATENT APPLICATION

(11) **EP 3 061 937 A1**
(43) Date of publication of application: **31.08.2016**
(21) Application number: 16157035.3
(22) Date of filing: 24.02.2016
(51) Int. Cl.: F01N 11/00, F01N 9/00

(54) **ABNORMALITY DETERMINATION SYSTEM FOR AN EXHAUST DEVICE**

(30) Priority: 26.02.2015 JP 2015036360
(71) Applicant: Toyota Jidosha Kabushiki Kaisha, Toyota-shi, Aichi-ken 471-8571 (JP)
(72) Inventor: TSUNOOKA, Takashi, TOYOTA-SHI, AICHI-KEN, 471-8571 (JP); OTSUKA, Takayuki, TOYOTA-SHI, AICHI-KEN, 471-8571 (JP); HASHIMOTO, Hiromasa, TOYOTA-SHI, AICHI-KEN, 471-8571 (JP); KOBASHI, Noriyasu, TOYOTA-SHI, AICHI-KEN, 471-8571 (JP)
(74) Representative: Intès, Didier Gérard André

(57) **Abstract**

An abnormality in an exhaust system component disposed at the downstream side of a particulate filter (4) is determined by using a differential pressure sensor (5) for measuring a differential pressure between a pressure of exhaust gas at the upstream side of the particulate filter (4) and an atmospheric pressure. In an abnormality determination system for an exhaust device according to the present disclosure, a differential pressure at a second flow rate of the exhaust gas different from a first flow rate of the exhaust gas is estimated based on a first actual differential pressure which is a differential pressure measured by the differential pressure sensor (5) and the first flow rate of the exhaust gas which is a flow rate of the exhaust gas at the time when the first actual differential pressure is measured, and when a difference between a second actual differential pressure, which is measured by the differential pressure sensor (5) at the time when the actual flow rate of the exhaust gas is the second flow rate of the exhaust gas, and an estimated differential pressure is equal to or greater than a predetermined threshold value, a determination is made that the exhaust system component at the downstream side of the particulate filter (4) is abnormal.

## Description

### Field of the Disclosure

The present disclosure relates to a technology in which in an exhaust device which is equipped with a particulate filter disposed in an exhaust passage of an internal combustion engine, and a unit for obtaining a differential pressure between an exhaust gas pressure at the upstream side of the particulate filter and an atmospheric pressure, it is determined whether there is an abnormality in exhaust system components which are disposed at the downstream side of the particulate filter.

### Description of the Related Art

There has been known a technology in which, in an arrangement where a particulate filter for trapping PM (Particulate Matter) in exhaust gas is disposed in an exhaust passage of an internal combustion engine, a differential pressure sensor is provided for measuring a differential pressure between a pressure of exhaust gas at the upstream side of the particulate filter and a pressure of exhaust gas at the downstream side of the particulate filter, so that an amount of PM trapped in the particulate filter, an abnormality thereof and so on, are determined based on a measured value of the differential pressure sensor (for example, see Japanese patent laid-open publication No. 2008-111409).

In Japanese patent laid-open publication No. H07-180528, there has been disclosed a technology in which, when the pressure of exhaust gas downstream of a particulate filter during the operation of an internal combustion engine deviates from a predetermined threshold range, a determination is made that there has occurred an abnormality in the flow of air at the downstream side of the particulate filter.

In Japanese patent laid-open publication No. 2009-041456, there has been disclosed a technology in which in a system provided with a differential pressure sensor which serves to detect a differential pressure between a pressure of exhaust gas at the upstream side of a particulate filter and a pressure of exhaust gas at the downstream side of the particulate filter, a difference between an estimated value of an amount of deposition of particulate matter with a larger flow rate of exhaust gas and an estimated value of an amount of deposition of particulate matter with a smaller flow rate of exhaust gas is obtained from the two flow rates of exhaust gas and the two estimated values of the amounts of deposition of particulate matter obtained within a predetermined period of time, and when this difference is larger than a predetermined threshold value, it is determined that leakage has occurred in the piping of the differential pressure sensor at the upstream side of the particulate filter.

In Japanese patent laid-open publication No. 2009-085126, there has been disclosed a technology in which the degree of change of a measured value of a differential pressure sensor with respect to a change of the volumetric flow rate of exhaust gas is calculated, and when this degree of change is larger than a threshold value corresponding to an amount of PM deposition in a particulate filter, it is determined that an abnormality has occurred in the piping of the differential pressure sensor at the downstream side of the particulate filter.

In Japanese patent laid-open publication No. 2007-292013, there has been disclosed a technology in which, at the time of transient operation of an internal combustion engine, the state of a particulate filter is determined by comparing a ratio between an amount of change of the flow rate of exhaust gas and an amount of change of the measured value of a differential pressure sensor with a predetermined threshold.

In Japanese patent laid-open publication No. 2008-057443, there has been disclosed a technology in which an amount of PM deposition in a particulate filter is estimated based on an operating state of an internal combustion engine or a measured value of a differential pressure sensor.

### SUMMARY OF THE DISCLOSURE

An exhaust passage at the downstream side of a particulate filter is in communication with the atmosphere, so there can be considered a method of determining an amount of PM trapped in the particulate filter, an abnormality thereof, and so on, by using a differential pressure obtaining unit that serves to obtain a differential pressure between a pressure of exhaust gas at the upstream side of the particulate filter and an atmospheric pressure.

When, however, an abnormality has occurred in an exhaust system component disposed at the downstream side of the particulate filter, such as an exhaust pipe, a muffler or an exhaust gas purification catalyst, , the differential pressure obtained by the differential pressure obtaining unit may not be a value which reflects the state of the particulate filter. On the other hand, there can also be considered a method of providing a device for detecting the abnormality of an exhaust system component which is disposed at the downstream side of a particulate filter, but an increase in the number of components as well as an increase in cost may be caused.

The present disclosure has been made in view of the actual circumstances as referred to above, and the object of the disclosure is that in an abnormality determination system for an exhaust device which is equipped with a particulate filter disposed in an exhaust passage of an internal combustion engine, and a differential pressure obtaining unit for obtaining a differential pressure between an exhaust gas pressure at the upstream side of the particulate filter and an atmospheric pressure, it is determined by the use of the differential pressure obtaining unit whether there is an abnormality in an exhaust system component which is disposed at the downstream side of the particulate filter.

In order to solve the above-mentioned problems, the present disclosure resides in an abnormality determination system for an exhaust device which includes a particulate filter that is disposed in an exhaust passage of an internal combustion engine for trapping particulate matter in exhaust gas, and a differential pressure obtaining unit configured to obtain an actual differential pressure which is an actual difference between a pressure of the exhaust gas at the upstream side of the particulate filter and an atmospheric pressure, wherein an abnormality of the exhaust device is determined by the abnormality determination system. The abnormality determination system is configured so that a differential pressure at a second flow rate of the exhaust gas different from a first flow rate of the exhaust gas is estimated based on a first actual differential pressure obtained by the differential pressure obtaining unit and the first flow rate of the exhaust gas, which is a flow rate of the exhaust gas at the time when the first actual differential pressure is obtained, and the differential pressure thus estimated is compared with a second actual differential pressure obtained by the differential pressure obtaining unit at the time when the actual flow rate of the exhaust gas is the second flow rate of the exhaust gas, whereby when a difference between the first actual differential pressure and the second actual differential pressure is equal to or greater than a predetermined threshold value, a determination is made that there is an abnormality in an exhaust system component which is disposed at the downstream side of the particulate filter.

Specifically, according to the present disclosure, there is provided an abnormality determination system for an exhaust device including a particulate filter that is disposed in an exhaust passage of an internal combustion engine for trapping particulate matter in exhaust gas, and a differential pressure obtaining unit configured to obtain an actual differential pressure which is an actual difference between a pressure of the exhaust gas at the upstream side of the particulate filter and an atmospheric pressure, wherein the abnormality determination system determines an abnormality of the exhaust device, the system comprising: a detection unit configured to detect a flow rate of the exhaust gas passing through the particulate filter; an estimation unit configured to estimate, based on a first actual differential pressure which is an actual differential pressure obtained by the differential pressure obtaining unit and a first flow rate of the exhaust gas which is a flow rate of the exhaust gas detected by the detection unit at the time when the first actual differential pressure is obtained, a differential pressure between a pressure of the exhaust gas at the upstream side of the particulate filter and an atmospheric pressure when the flow rate of the exhaust gas passing through the particulate filter is a second flow rate of the exhaust gas different from the first flow rate of the exhaust gas; and a determination unit configured to determine that an exhaust system component disposed at the downstream side of the particulate filter is abnormal, when a difference between the differential pressure estimated by the estimation unit and a second actual differential pressure which is an actual differential pressure obtained by the differential pressure obtaining unit at the time when the flow rate of the exhaust gas detected by the detection unit is equal to the second flow rate of the exhaust gas is equal to or greater than a predetermined threshold value. The "exhaust system component" referred to herein is, for example, an exhaust pipe, a muffler, an exhaust gas purification catalyst, or the like, which is disposed at the downstream side of the particulate filter. In addition, the "differential pressure estimated by the estimation unit" referred to herein is an estimated value of the differential pressure assuming that the exhaust system component at the downstream side of the particulate filter is normal. Moreover, the "predetermined threshold value" referred to herein is a value at which it is considered that when an abnormality occurs in the exhaust system component at the downstream side of the particulate filter, a difference equal to or greater than the predetermined threshold value will be generated between the estimated differential pressure and the second actual differential pressure at the second flow rate of the exhaust gas, and is a value which can be obtained in advance by adaptation processing making use of experiments, etc.

In the abnormality determination system for an exhaust device constructed in this manner, the differential pressure obtaining unit obtains the first actual differential pressure, and the detection unit detects the first flow rate of the exhaust gas. At that time, by setting the first flow rate of the exhaust gas in advance, an actual differential pressure, which is obtained by the differential pressure obtaining unit at the time when the flow rate of the exhaust gas detected by the detection unit becomes equal to the first flow rate of the exhaust gas, may be used as the first actual differential pressure. In addition, an actual differential pressure obtained by the differential pressure obtaining unit at an arbitrary point in time may be used as the first actual differential pressure, and a flow rate of the exhaust gas detected by the detection unit at the same point in time may be used as the first flow rate of the exhaust gas. When the first actual differential pressure and the first flow rate of the exhaust gas are obtained and detected as described above, the estimation unit estimates a differential pressure (hereinafter, referred to as an "estimated differential pressure") between the pressure of the exhaust gas at the upstream side of the particulate filter and the atmospheric pressure when the flow rate of the exhaust gas passing through the particulate filter is the second flow rate of the exhaust gas, by using the first actual differential pressure and the first flow rate of the exhaust gas as parameters. Here, when the exhaust system component is normal, the differential pressure between the pressure of the exhaust gas at the upstream side of the particulate filter and the atmospheric pressure is correlated with the flow rate of the exhaust gas passing through the particulate filter. For example, when the exhaust system component is normal, the differential pressure between the pressure of the exhaust gas at the upstream side of the particulate filter and the atmospheric pressure becomes larger in accordance with the increasing flow rate of the exhaust gas passing through the particulate filter. Accordingly, when such a correlation has been experimentally obtained in advance, the differential pressure in the case of assuming that the exhaust system component is normal and the flow rate of the exhaust gas passing through the particulate filter is the second flow rate of the exhaust gas can be estimated by using the first actual differential pressure and the first flow rate of the exhaust gas as arguments. Then, when the flow rate of the exhaust gas detected by the detection unit becomes equal to the second flow rate of the exhaust gas, the differential pressure obtaining unit obtains the second actual differential pressure. The determination unit determines whether the exhaust system component is abnormal or normal, by making a comparison between the second actual differential pressure obtained by the differential pressure obtaining unit and the estimated differential pressure estimated by the estimation unit. That is, when the difference between the second actual differential pressure and the estimated differential pressure is equal to or greater than the predetermined threshold value, the determination unit makes a determination that the exhaust system component is abnormal. Here, there is a difference in the ratio of an amount of change of the differential pressure with respect to an amount of change of the flow rate of the exhaust gas, between the case where the exhaust system component is abnormal and the case where it is normal. For that reason, the second actual differential pressure is different between the case where an abnormality has occurred in the exhaust system component and the case where the exhaust system component is normal. As a result, the second actual differential pressure when the exhaust system component is abnormal becomes different from that when the exhaust system component is normal. Then, the estimated differential pressure corresponds to the differential pressure in the case of the exhaust system component is normal, and so it is considered that the second actual differential pressure when an abnormality has occurred in the exhaust system component becomes a value different from the estimated differential pressure. However, because the estimated differential pressure may include an estimation error, it is preferable to make a determination that the exhaust system component is abnormal, on condition that the difference between the second actual differential pressure and the estimated differential pressure is larger than the estimation error. Accordingly, it is assumed that the predetermined threshold value is set to a value larger than the estimation error. According to such a configuration, the abnormality of the exhaust system component can be determined by making use of the existing differential pressure obtaining unit, so it is not necessary to separately provide a device for detecting the abnormality of the exhaust system component.

Here, note that the actual differential pressure obtained by the differential pressure obtaining unit changes according to the atmospheric pressure. For that reason, when an atmospheric pressure at the time when the first actual differential pressure is obtained and an atmospheric pressure when the second actual differential pressure is obtained are different from each other, abnormality determination of the exhaust system component may not be able to be carried out in an accurate manner. Accordingly, the abnormality determination system for an exhaust device according to the present disclosure may further comprise: an atmospheric pressure obtaining unit configured to obtain an atmospheric pressure; and a correction unit configured to correct the estimated differential pressure estimated by the estimation unit, based on an atmospheric pressure difference, which is a difference between an atmospheric pressure obtained by the atmospheric pressure obtaining unit at the time when the first actual differential pressure is obtained and an atmospheric pressure obtained by the atmospheric pressure obtaining unit at the time when the second actual differential pressure is obtained; wherein the determination unit may make a determination that the exhaust system component is abnormal, when the difference between the estimated differential pressure after having been corrected by the correction unit and the second actual differential pressure is equal to or greater than the predetermined threshold value. According to such a configuration, the estimated differential pressure corrected by the correction unit becomes an estimated value of the differential pressure at the same atmospheric pressure as the atmospheric pressure at the time when the second actual differential pressure is obtained. For that reason, even when the atmospheric pressure at the time when the first actual differential pressure is obtained and the atmospheric pressure at the time when the second actual differential pressure is obtained are different from each other, the abnormality of the exhaust system component is able to be determined in a more accurate manner, by making a comparison between the estimated differential pressure after correction and the second actual differential pressure.

In addition, the actual differential pressure obtained by the differential pressure obtaining unit also changes with an amount of the PM trapped in the particulate filter (an amount of trapped PM), in addition to the atmospheric pressure. For that reason, when an amount of trapped PM at the time when the first actual differential pressure is obtained and an amount of trapped PM at the time when the second actual differential pressure is obtained are different from each other, abnormality determination of the exhaust system component may not be able to be carried out in an accurate manner. Accordingly, the abnormality determination system for an exhaust device according to the present disclosure may further comprise: a calculation unit configured to calculate, based on an operation history of the internal combustion engine, a difference between an amount of trapped PM in the particulate filter at the time when the differential pressure obtaining unit obtains the first actual differential pressure and an amount of trapped PM in the particulate filter at the time when the differential pressure obtaining unit obtains the second actual differential pressure, wherein the correction unit may correct the estimated differential pressure estimated by the estimation unit based on the atmospheric pressure difference and the difference between the amounts of trapped PM calculated by the calculation unit. In that case, the determination unit may make a determination that the exhaust system component is abnormal, when the difference between the estimated differential pressure after having been corrected by the correction unit and the second actual differential pressure is equal to or greater than the predetermined threshold value. According to such a configuration, the estimated differential pressure corrected by the correction unit becomes an estimated value of the differential pressure at the same atmospheric pressure as the atmospheric pressure at the time when the second actual differential pressure is obtained, and also becomes an estimated value of the differential pressure in the same amount of trapped PM as the amount of trapped PM at the time when the second actual differential pressure is obtained. For that reason, even when the atmospheric pressure at the time when the first actual differential pressure is obtained and the atmospheric pressure at the time when the second actual differential pressure is obtained are different from each other, and/ or when the amount of trapped PM at the time when the first actual differential pressure is obtained and the amount of trapped PM at the time when the second actual differential pressure is obtained are different from each other, the abnormality of the exhaust system component can be determined in a more accurate manner, by making a comparison between the estimated differential pressure after correction and the second actual differential pressure.

Here, when an abnormality in which the pressure loss of the exhaust system component decreases (e.g., exhaust gas leakage due to a hole or perforation) has occurred, the ratio of the amount of change of the differential pressure with respect to the amount of change of the flow rate of the exhaust gas becomes larger, in comparison with the case where the exhaust system component is normal. That is, an amount of increase of the differential pressure when the flow rate of the exhaust gas has increased becomes larger when there has occurred an abnormality in which the pressure loss of the exhaust system component decreases than when the exhaust system component is normal. In addition, an amount of decrease of the differential pressure when the flow rate of the exhaust gas has decreased becomes larger when there has occurred an abnormality in which the pressure loss of the exhaust system component decreases than when the exhaust system component is normal. Accordingly, when the abnormality in which the pressure loss of the exhaust system component decreases has occurred, the magnitude relation of the second flow rate of the exhaust gas with respect to the first flow rate of the exhaust gas and the magnitude relation of the second actual differential pressure with respect to the estimated differential pressure become equivalent to each other. That is, when the abnormality in which the pressure loss of the exhaust system component decreases has occurred, either one of the following relations holds: when the first flow rate of the exhaust gas is larger than the second flow rate of the exhaust gas, the estimated differential pressure becomes larger than the second actual differential pressure; and when the first flow rate of the exhaust gas is smaller than the second flow rate of the exhaust gas, the estimated differential pressure becomes smaller than the second actual differential pressure.

On the other hand, when an abnormality in which the pressure loss of the exhaust system component increases (e.g., reduction of a channel cross section due to clogging or an increase of accumulated or deposited matter) has occurred, the ratio of the amount of change of the differential pressure with respect to the amount of change of the flow rate of the exhaust gas becomes smaller, in comparison with the case where the exhaust system component is normal. That is, an amount of increase of the differential pressure when the flow rate of the exhaust gas has increased becomes smaller when there has occurred an abnormality in which the pressure loss of the exhaust system component decreases than when the exhaust system component is normal. In addition, an amount of decrease of the differential pressure when the flow rate of the exhaust gas has decreased becomes smaller when there has occurred an abnormality in which the pressure loss of the exhaust system component decreases than when the exhaust system component is normal. Accordingly, when the abnormality in which the pressure loss of the exhaust system component increases has occurred, the magnitude relation of the second flow rate of the exhaust gas with respect to the first flow rate of the exhaust gas and the magnitude relation of the second actual differential pressure with respect to the estimated differential pressure become opposite to each other. That is, when the abnormality in which the pressure loss of the exhaust system component increases has occurred, either one of the following relations holds: when the first flow rate of the exhaust gas is larger than the second flow rate of the exhaust gas, the estimated differential pressure becomes smaller than the second actual differential pressure; and when the first flow rate of the exhaust gas is smaller than the second flow rate of the exhaust gas, the estimated differential pressure becomes larger than the second actual differential pressure.

Accordingly, when a difference between the estimated differential pressure and the second actual differential pressure is equal to or greater than the predetermined threshold value, the determination unit may make a determination that an abnormality in which the pressure loss of the exhaust system component decreases has occurred, when the first flow rate of the exhaust gas is larger than the second flow rate of the exhaust gas and when the estimated differential pressure is larger than the second actual differential pressure, or when the first flow rate of the exhaust gas is smaller than the second flow rate of the exhaust gas and when the estimated differential pressure is smaller than the second actual differential pressure, whereas the determination unit may make a determination that an abnormality in which the pressure loss of the exhaust system component increases has occurred, when the first flow rate of the exhaust gas is larger than the second flow rate of the exhaust gas and when the estimated differential pressure is smaller than the second actual differential pressure, or when the first flow rate of the exhaust gas is smaller than the second flow rate of the exhaust gas and when the estimated differential pressure is larger than the second actual differential pressure. According to such a configuration, when an abnormality has occurred in the exhaust system component, it is possible to determine whether such an abnormality is due to a decrease in the pressure loss of the exhaust system component, or due to an increase in the pressure loss of the exhaust system component.

Then, the abnormality determination system for an exhaust device according to the present disclosure may further comprise: a trapped PM amount obtaining unit configured to obtain an amount of trapped PM in the particulate filter, by using as a parameter the actual differential pressure obtained by the differential pressure obtaining unit; and a control unit configured to inhibit the obtaining of the amount of trapped PM by the trapped PM amount obtaining unit, when a determination has been made by the determination unit that the exhaust system component is abnormal. When an abnormality has occurred in the exhaust system component, the correlation between the amount of trapped PM in the particulate filter and the actual differential pressure obtained by the differential pressure obtaining unit becomes low, so it becomes difficult to obtain an accurate amount of trapped PM from the actual differential pressure obtained by the differential pressure obtaining unit. Accordingly, when a determination has been made by the determination unit that the exhaust system component is abnormal, the obtaining of the amount of trapped PM by means of the trapped PM amount obtaining unit is inhibited, thereby making it possible to prevent an erroneous or incorrect amount of trapped PM from being obtained.

However, when an abnormality has occurred in the particulate filter, even when an abnormality has not occurred in the exhaust system component, the difference between the estimated differential pressure and the second actual differential pressure may become equal to or greater than the predetermined threshold value. Accordingly, the abnormality determination of the exhaust system component may be carried out, on condition that before carrying out the abnormality determination of the exhaust system component, an abnormality diagnosis of the particulate filter is carried out, and that it is diagnosed that the particulate filter is normal. As a method for diagnosing an abnormality of the particulate filter, the following method can be used. That is, for example, an electrode type PM sensor is arranged in the exhaust passage at the downstream side of the particulate filter, and when a period of time from the end of processing to eliminate or remove the PM deposited between the electrodes of the PM sensor until the electrodes become conductive is equal to or greater than a predetermined period of time, the particulate filter is determined to be normal.

According to the present disclosure, in an abnormality determination system for an exhaust device which is equipped with a particulate filter disposed in an exhaust passage of an internal combustion engine, and a differential pressure obtaining unit configured to obtain a differential pressure between an exhaust gas pressure at the upstream side of the particulate filter and an atmospheric pressure, it can be determined by the use of the differential pressure obtaining unit whether there is an abnormality in an exhaust system component which is disposed at the downstream side of the particulate filter.

Further features of the present disclosure will become apparent from the following description of an exemplary embodiment with reference to the attached drawings.

### BRIEF DESCRIPTION OF THE DRAWINGS

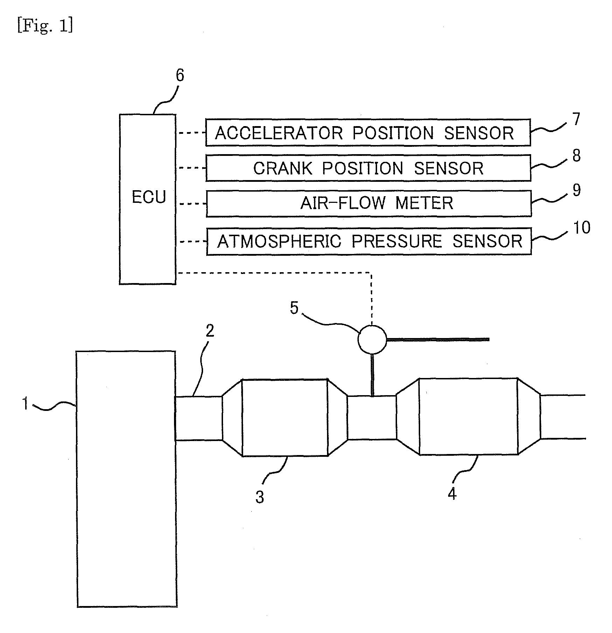

Fig. 1 is a view showing the schematic construction of an exhaust system of an internal combustion engine, to which the present disclosure is applied.

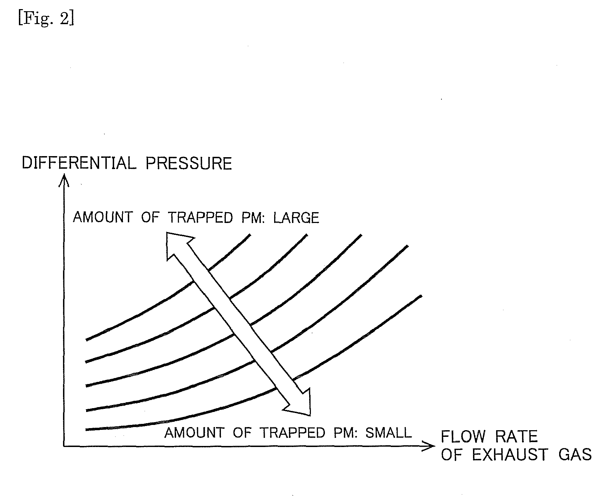

Fig. 2 is a view showing the correlation among a flow rate of exhaust gas, a differential pressure, and an amount of trapped PM, when a particulate filter and an exhaust system component are normal.

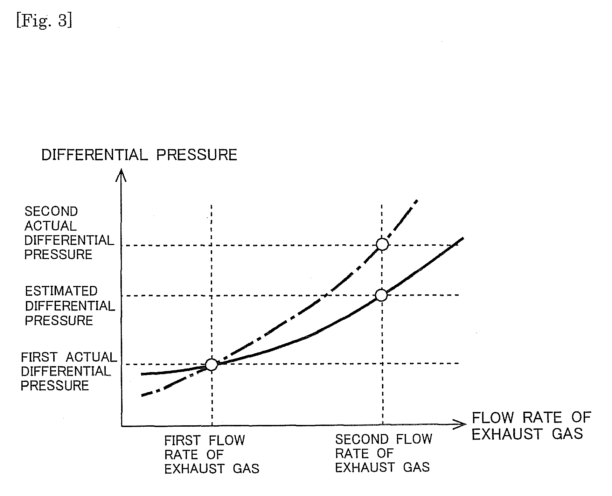

Fig. 3 is a view showing the relation between an estimated differential pressure and a second actual differential pressure, when an abnormality has occurred in which the pressure loss of the exhaust system component is decreased, and when a first flow rate of exhaust gas is smaller than a second flow rate of exhaust gas.

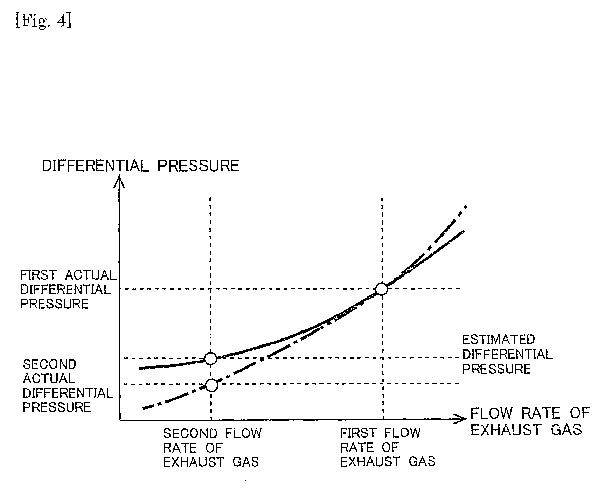

Fig. 4 is a view showing the relation between the estimated differential pressure and the second actual differential pressure, when an abnormality has occurred in which the pressure loss of the exhaust system component is decreased, and when the first flow rate of exhaust gas is larger than the second flow rate of exhaust gas.

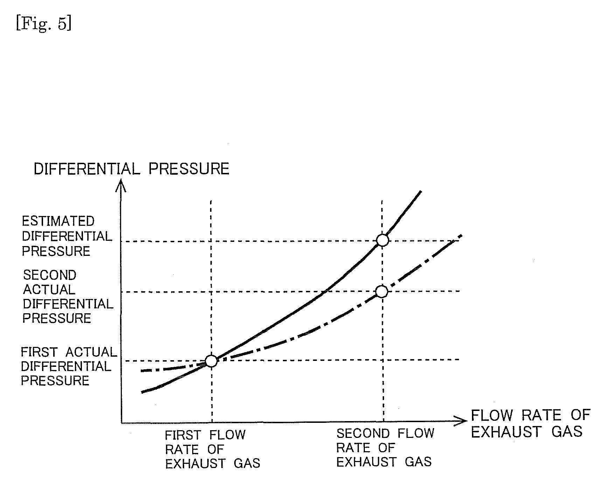

Fig. 5 is a view showing the relation between the estimated differential pressure and the second actual differential pressure, when an abnormality has occurred in which the pressure loss of the exhaust system component is increased, and when the first flow rate of exhaust gas is smaller than the second flow rate of exhaust gas.

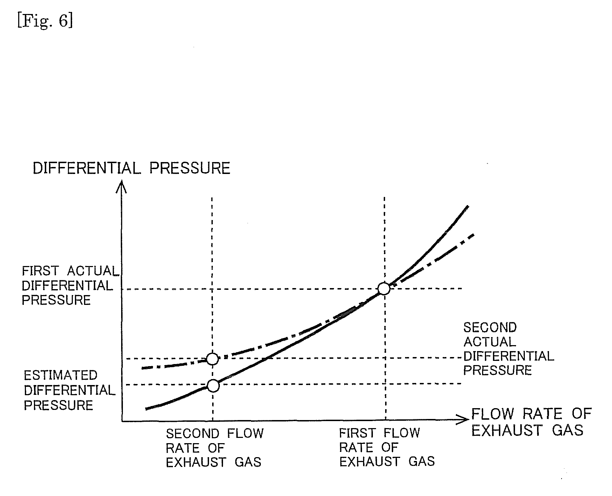

Fig. 6 is a view showing the relation between the estimated differential pressure and the second actual differential pressure, when an abnormality has occurred in which the pressure loss of the exhaust system component is increased, and when the first flow rate of exhaust gas is larger than the second flow rate of exhaust gas.

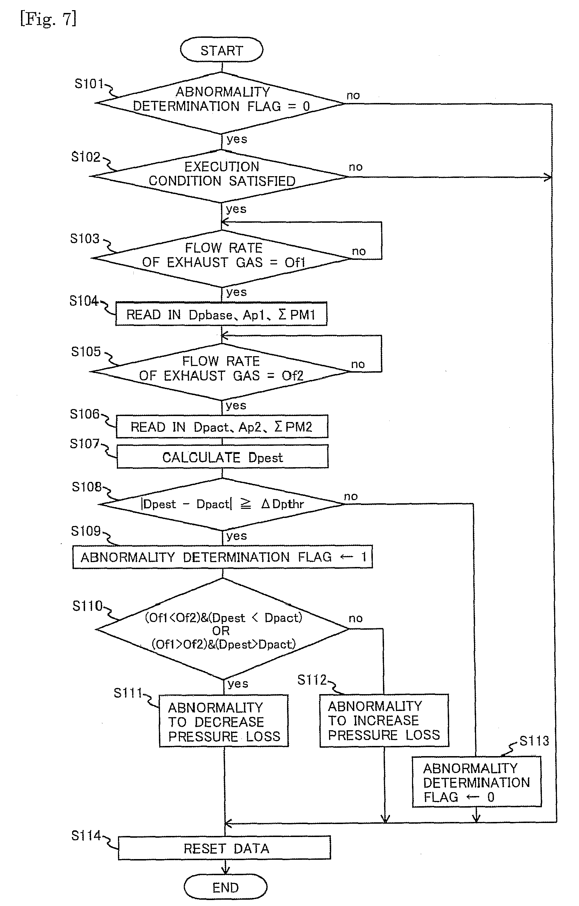

Fig. 7 is a flow chart showing a processing routine carried out by an ECU when abnormality determination processing is performed.

### DESCRIPTION OF THE EMBODIMENTS

Hereinafter, a specific embodiment of the present disclosure will be described based on the attached drawings. However, the dimensions, materials, shapes, relative arrangements and so on of component parts described in the embodiment are not intended to limit the technical scope of the present disclosure to these alone in particular as long as there are no specific statements.

Fig. 1 is a view showing the schematic construction of an exhaust system of an internal combustion engine, to which the present disclosure is applied. The internal combustion engine 1 shown in Fig. 1 is an internal combustion engine of spark ignition type which is mounted on a vehicle, but may be an internal combustion engine of compression ignition type. An exhaust pipe 2, through which exhaust gas resulting from combusted or burned gas in cylinders of the internal combustion engine 1 passes, is connected to the internal combustion engine 1. A catalyst casing 3 is arranged in the middle of the exhaust pipe 2. The catalyst casing 3 contains an exhaust gas purification catalyst such as an oxidation catalyst in a cylindrical casing. A filter casing 4 is arranged in the exhaust pipe 2 at the downstream side of the catalyst casing 3. The filter casing 4 has a particulate filter contained in a cylindrical casing. The particulate filter serves to trap particulate matter (PM) such as soot contained in the exhaust gas.

A differential pressure sensor 5 is mounted on the exhaust pipe 2 at a location between the catalyst casing 3 and the filter casing 4. The differential pressure sensor 5 is a sensor which serves to measure an actual differential pressure between a pressure of the exhaust gas flowing into the filter casing 4 and an atmospheric pressure, and corresponds to a "differential pressure obtaining unit" according to the present disclosure. Here, note that the "differential pressure obtaining unit" according to the present disclosure can also be achieved by a pressure sensor for measuring the pressure of the exhaust gas flowing into the filter casing 4, a pressure sensor for measuring the atmospheric pressure, and an ECU 6 that calculates a difference between the measured values of these two pressure sensors. The measured value of the differential pressure sensor 5 is inputted to the ECU 6. The ECU 6 is an electronic control unit which is composed of a CPU, a ROM, a RAM, a backup RAM, and so on. The ECU 6 is electrically connected to a variety of kinds of sensors such as an accelerator position sensor 7, a crank position sensor 8, an air flow meter 9, an atmospheric pressure sensor 10, and so on, in addition to the differential pressure sensor 5.

The accelerator position sensor 7 is a sensor that outputs an electrical signal correlated with an amount of operation (accelerator opening) of an unillustrated accelerator pedal. The crank position sensor 8 is a sensor that outputs an electrical signal correlated with the rotational position of a crankshaft of the internal combustion engine 1. The air flow meter 9 is a sensor that outputs an electrical signal correlated with an amount of intake air in the internal combustion engine 1. The atmospheric pressure sensor 10 is a sensor that outputs an electrical signal correlated with the atmospheric pressure, and corresponds to an "atmospheric pressure obtaining unit" according to the present disclosure.

The ECU 6 controls the operating state of the internal combustion engine 1 based on the measured values of the above-mentioned variety of kinds of sensors. In addition, the ECU 6 carries out abnormality determination processing which is the gist of the present disclosure. The abnormality determination processing referred to herein is processing which determines an abnormality of an exhaust system component, such as the exhaust pipe 2, a silencer, the exhaust gas purification catalyst, or the like, which is disposed at the downstream side of the filter casing 4, and is processing which determines the leakage of exhaust gas due to a hole in the exhaust system component, the clogging thereof, etc. In the following, reference will be made to a method of carrying out the abnormality determination processing in this embodiment.

In the abnormality determination processing, the ECU 6 reads in the measured value of the differential pressure sensor 5 (a first actual differential pressure), and at the same time detects the flow rate of the exhaust gas (a first flow rate of the exhaust gas) at the time when the first actual differential pressure is measured. The flow rate of the exhaust gas may be directly detected by mounting a flow rate sensor on the exhaust pipe 2, or may be calculated by adding an amount of fuel injection to a measured value of the air flow meter 9 (an amount of intake air). In this manner, by detecting the flow rate of the exhaust gas by means of the ECU 6, a "detection unit" according to the present disclosure is achieved. Subsequently, by using the first actual differential pressure and the first flow rate of the exhaust gas as parameters, the ECU 6 estimates an estimated value of the difference (an estimated differential pressure) between the pressure of the exhaust gas flowing into the filter casing 4 and the atmospheric pressure when the flow rate of the exhaust gas is a second flow rate different from the first flow rate of the exhaust gas, and when the exhaust system component is normal. Here, in the ROM of the ECU 20, there has been beforehand stored a map or a function expression showing the correlation between the flow rate of the exhaust gas, the differential pressure, and the amount of trapped PM, as shown in Fig. 2. Here, note that the correlation shown in Fig. 2 is assumed to represent a correlation when the particulate filter and the exhaust system component are normal. The map or function expression showing such a correlation is used when the amount of trapped PM in the particulate filter is obtained by using the flow rate of the exhaust gas and the measured value of the differential pressure sensor 5 as arguments, but is also used when the estimated differential pressure is obtained in the abnormality determination processing. Specifically, the ECU 6 first obtains the amount of trapped PM by using the first flow rate of the exhaust gas and the first actual differential pressure as arguments, and then obtains the estimated differential pressure by using the amount of trapped PM and the second flow rate of the exhaust gas as arguments. In such a manner, by estimating the estimated differential pressure by means of the ECU 6, an "estimation unit" according to the present disclosure is achieved. In addition, a "trapped PM amount obtaining unit" according to the present disclosure is achieved by obtaining the amount of trapped PM in the particulate filter by using the flow rate of the exhaust gas, the measured value of the differential pressure sensor 5, and the map or function expression shown in Fig. 2, by means of the ECU 6.

When the estimated differential pressure, which is the estimated value of the differential pressure at the second flow rate of the exhaust gas, is obtained, the ECU 6 calculates a difference between a measured value of the differential pressure sensor 5 (a second actual differential pressure) at the time when the flow rate of the exhaust gas is the second flow rate, and the estimated differential pressure. Then, the ECU 6 determines whether the difference between the second actual differential pressure and the estimated differential pressure is equal to or greater than a predetermined threshold value. Here, the measured value of the differential pressure sensor 5 tends to increase in accordance with the increasing flow rate of the exhaust gas, but the ratio of the amount of change of the differential pressure with respect to the amount of change of the flow rate of the exhaust gas at the normal condition of the exhaust system component is different from that at the abnormal condition of the exhaust system component. For that reason, the second actual differential pressure is different between the case where an abnormality has occurred in the exhaust system component and the case where the exhaust system component is normal. As a result, the second actual differential pressure when the exhaust system component is abnormal becomes different from that when the exhaust system component is normal. Accordingly, it is considered that the second actual differential pressure when an abnormality has occurred in the exhaust system component becomes a value different from an estimated differential pressure which is an estimated value of the differential pressure when the exhaust system component is normal. However, when an estimation error is included in the estimated differential pressure, the second actual differential pressure may be different from the estimated differential pressure, in spite of the fact that the exhaust system component is normal, or the second actual differential pressure may become the same as the estimated differential pressure, in spite of the fact that the exhaust system component is abnormal. Accordingly, the predetermined threshold value is set to a value which is greater than the estimation error of the estimated differential pressure, and at which occurs a difference equal to or greater than the predetermined threshold value between the estimated differential pressure and the second actual differential pressure when the exhaust system component is abnormal. Such a predetermined threshold value has been decided in advance by adaptation processing making use of experiments, etc. Then, when the difference between the second actual differential pressure and the estimated differential pressure is equal to or greater than the predetermined threshold value, the ECU 6 should only make a determination that the exhaust system component is abnormal.

Here, note that the difference between the estimated differential pressure and the second actual differential pressure changes according to the magnitudes of the first flow rate of the exhaust gas and the second flow rate of the exhaust gas. For that reason, when the first flow rate of the exhaust gas and the second flow rate of the exhaust gas are fixed in advance to constant flow rates, respectively, the predetermined threshold value may be fixed to a constant value, but when the first flow rate of the exhaust gas and the second flow rate of the exhaust gas are not fixed in advance to the constant values, respectively, as in the case of using, as the first actual differential pressure, a value measured at an arbitrary time by the differential pressure sensor 5, the predetermined threshold value should be changed according to the magnitudes of the first flow rate of the exhaust gas and the second flow rate of the exhaust gas. For example, the predetermined threshold value may be increased in accordance with increasing flow rates of the first and second flow rates of exhaust gas (e.g., proportionally). In addition, when the difference between the first flow rate of the exhaust gas and the second flow rate of the exhaust gas becomes relatively small, the difference between the estimated differential pressure and the second actual differential pressure may also become small, so it may become difficult to determine the abnormality of the exhaust system component in an accurate manner. Accordingly, in either the case where the first flow rate of the exhaust gas and the second flow rate of the exhaust gas are fixed in advance to the constant values, respectively, or the case where the first flow rate of the exhaust gas and the second flow rate of the exhaust gas are not fixed in advance to the constant values, respectively, it is desirable to decide the first flow rate of the exhaust gas and the second flow rate of the exhaust gas in such a manner that the difference between the first flow rate of the exhaust gas and the second flow rate of the exhaust gas becomes relatively large. For example, it is desirable that the difference between the first flow rate of the exhaust gas and the second flow rate of the exhaust gas have been decided in such a manner that a clear difference in the difference between the estimated differential pressure and the second actual differential pressure occurs between when the exhaust system component is abnormal and when the exhaust system component is normal.

Then, when the difference between the estimated differential pressure and the second actual differential pressure is equal to or greater than the predetermined threshold value, the ECU 6 determines whether an abnormality to decrease the pressure loss of the exhaust system component has occurred, or an abnormality to increase the pressure loss of the exhaust system component has occurred, by determining whether the magnitude relation of the second flow rate of the exhaust gas with respect to the first flow rate of the exhaust gas and the magnitude relation of the second actual differential pressure with respect to the estimated differential pressure become equivalent to each other.

Here, when an abnormality in which the pressure loss of the exhaust system component becomes small (e.g., exhaust gas leakage due to a hole or improper seal) has occurred, the ratio of the amount of change of the differential pressure with respect to the amount of change of the flow rate of the exhaust gas becomes larger, in comparison with the case where the exhaust system component is normal. Accordingly, when the abnormality in which the pressure loss of the exhaust system component becomes small has occurred when the first flow rate of the exhaust gas is smaller than the second flow rate of the exhaust gas, the estimated differential pressure becomes smaller than the second actual differential pressure, as shown in Fig. 3. In addition, when the abnormality in which the pressure loss of the exhaust system component becomes small has occurred when the first flow rate of the exhaust gas is larger than the second flow rate of the exhaust gas, the estimated differential pressure becomes larger than the second actual differential pressure, as shown in Fig. 4. Accordingly, when the abnormality in which the pressure loss of the exhaust system component becomes small has occurred, the magnitude relation of the second flow rate of the exhaust gas with respect to the first flow rate of the exhaust gas and the magnitude relation of the second actual differential pressure with respect to the estimated differential pressure become equivalent to each other.

On the other hand, when an abnormality in which the pressure loss of the exhaust system component becomes large (e.g., reduction of a channel cross section due to blockage or an increase of accumulated or deposited matter) has occurred, the ratio of the amount of change of the differential pressure with respect to the amount of change of the flow rate of the exhaust gas becomes smaller, in comparison with where the exhaust system component is normal. Accordingly, when the abnormality in which the pressure loss of the exhaust system component becomes large has occurred when the first flow rate of the exhaust gas is smaller than the second flow rate of the exhaust gas, the estimated differential pressure becomes larger than the second actual differential pressure, as shown in Fig. 5. In addition, when the abnormality in which the pressure loss of the exhaust system component becomes large has occurred when the first flow rate of the exhaust gas is larger than the second flow rate of the exhaust gas, the estimated differential pressure becomes smaller than the second actual differential pressure, as shown in Fig. 6. Accordingly, when the abnormality in which the pressure loss of the exhaust system component becomes large has occurred, the magnitude relation of the second flow rate of the exhaust gas with respect to the first flow rate of the exhaust gas and the magnitude relation of the second actual differential pressure with respect to the estimated differential pressure become opposite to each other.

Considering the characteristics shown in the above-mentioned Fig. 3 through Fig. 6, when the magnitude relation of the second flow rate of the exhaust gas with respect to the first flow rate of the exhaust gas and the magnitude relation of the second actual differential pressure with respect to the estimated differential pressure are equivalent to each other (i.e., when the first flow rate of the exhaust gas is smaller than the second flow rate of the exhaust gas and the estimated differential pressure is smaller than the second actual differential pressure, or when the first flow rate of the exhaust gas is larger than the second flow rate of the exhaust gas and the estimated differential pressure is larger than the second actual differential pressure), a determination can be made that the abnormality in which the pressure loss of the exhaust system component is decreased has occurred. On the other hand, when the magnitude relation of the second flow rate of the exhaust gas with respect to the first flow rate of the exhaust gas and the magnitude relation of the second actual differential pressure with respect to the estimated differential pressure are opposite to each other (i.e., when the first flow rate of the exhaust gas is smaller than the second flow rate of the exhaust gas and the estimated differential pressure is larger than the second actual differential pressure, or when the first flow rate of the exhaust gas is larger than the second flow rate of the exhaust gas and the estimated differential pressure is smaller than the second actual differential pressure), a determination can be made that the abnormality in which the pressure loss of the exhaust system component is increased has occurred.

However, the measured value of the differential pressure sensor 5 changes according to the atmospheric pressure. For that reason, when an atmospheric pressure at the time when the first actual differential pressure is measured and an atmospheric pressure at the time when the second actual differential pressure is measured are different from each other, the estimated differential pressure estimated based on the first actual differential pressure may not become a value corresponding to an atmospheric pressure at the time of measurement of the second actual differential pressure. Accordingly, when an atmospheric pressure at the time when the first actual differential pressure is measured and an atmospheric pressure when the second actual differential pressure is measured are different from each other, it may become difficult to determine the abnormality of the exhaust system component in an accurate manner. In order to cope with such a problem, in this embodiment, the estimated differential pressure is corrected by adding to the estimated differential pressure an atmospheric pressure difference (i.e., a value obtained by subtracting the second atmospheric pressure from the first atmospheric pressure), which is a difference between a measured value of the atmospheric pressure sensor 10 at the time of the first actual differential pressure being measured (hereinafter, referred to as a "first atmospheric pressure") and a measured value of the atmospheric pressure sensor 10 at the time of the second actual differential pressure being measured (hereinafter, referred to as a "second atmospheric pressure"). When the estimated differential pressure is corrected in this manner, the estimated differential pressure thus corrected becomes a value corresponding to the atmospheric pressure at the time when the second actual differential pressure is measured. Then, by carrying out the abnormality determination of the exhaust system component based on the estimated differential pressure after correction and the second actual differential pressure, it becomes possible to determine the abnormality of the exhaust system component in a more accurate manner, even when an atmospheric pressure at the time when the first actual differential pressure is measured and an atmospheric pressure when the second actual differential pressure is measured are different from each other.

In addition, the detected value of the differential pressure sensor 5 also changes according to the amount of PM trapped in the particulate filter, in addition to the atmospheric pressure. For that reason, when an amount of trapped PM at the time when the first actual differential pressure is measured and an amount of trapped PM at the time when the second actual differential pressure is measured are different from each other, the estimated differential pressure estimated based on the first actual differential pressure may not become a value corresponding to an amount of trapped PM at the time of measurement of the second actual differential pressure, and hence, it may become difficult to determine the abnormality of the exhaust system component in an accurate manner. Accordingly, in this embodiment, the estimated differential pressure is corrected based on a difference between an amount of trapped PM (hereinafter, referred to as a "first amount of trapped PM") at the time when the first actual differential pressure is measured and an amount of trapped PM (hereinafter, referred to as a "second amount of trapped PM") at the time when the second actual differential pressure is measured. Specifically, an amount of change of the differential pressure resulting from a difference between the first amount of trapped PM and the second amount of trapped PM (i.e., a value obtained by subtracting the first amount of trapped PM from the second amount of trapped PM) is obtained, and the amount of change thus obtained is added to the estimated differential pressure. At that time, the correlation between the amount of change of the amount of trapped PM and the amount of change of the differential pressure has been experimentally obtained in advance, and the correlation therebetween thus obtained has been stored in the ROM of the ECU 6 in the form of a map or a function expression. Then, the ECU 6 should only derive the amount of change of the differential pressure by accessing the map or function expression described above with the use of the difference between the first amount of trapped PM and the second amount of trapped PM as an argument. When the estimated differential pressure is further corrected in this manner, the estimated differential pressure thus corrected becomes a value corresponding to the amount of trapped PM at the time when the second actual differential pressure is measured.

Here, note that the first amount of trapped PM and the second amount of trapped PM mentioned above should be obtained, without using the above-mentioned correlation in Fig. 2. In the method of obtaining the amount of trapped PM using the correlation in Fig. 2, it is necessary to use the measured value of the differential pressure sensor 5 as an argument, but at the time of obtaining the first amount of trapped PM and the second amount of trapped PM described above, it is unknown as to whether or not the exhaust system component is normal, and hence, it is unknown as to whether or not the measured value of the differential pressure sensor 5 is a value reflecting the amount of trapped PM. Accordingly, the first amount of trapped PM and the second amount of trapped PM mentioned above should be estimated from an operation history of the internal combustion engine 1, without using the above-mentioned correlation in Fig. 2. Specifically, the ECU 6 first calculates an amount of the PM discharged from the internal combustion engine 1 per unit time by using, as parameters, the air fuel ratio and an amount of an air fuel mixture (a total sum of an amount of fuel injection and an amount of intake air). In addition, the ECU 6 calculates a PM trapping efficiency of the particulate filter (i.e., a ratio of the amount of the PM trapped in the particulate filter with respect to the amount of PM flowing into the particulate filter) by using as parameters the flow rate (the flow speed) of the exhaust gas and the last estimated value of the amount of trapped PM. Subsequently, the ECU 6 calculates the amount of the PM trapped in the particulate filter per unit time by multiplying the PM trapping efficiency to the amount of the PM discharged from the internal combustion engine 1 per unit time. Then, the ECU 6 estimates the amount of trapped PM in the particulate filter by integrating the amount of trapped PM per unit time. The estimation processing of the amount of trapped PM according to such a method should be carried out in a repeated manner during the operation period of the internal combustion engine 1. Then, the ECU 6 should calculate a difference between an estimated value of the amount of trapped PM (the first amount of trapped PM) at the time when the first actual differential pressure is measured and an estimated value of the amount of trapped PM (the second amount of trapped PM) at the time when the second actual differential pressure is measured (i.e., corresponds to a "calculation unit" of the present disclosure), and should obtain an amount of change of the differential pressure resulting from the change of the amount of trapped PM, by using the difference thus calculated as an argument.

As described above, a "correction unit" according to the present disclosure is achieved by correcting the estimated differential pressure based on the difference between the first atmospheric pressure and the second atmospheric pressure (the atmospheric pressure difference), or the difference between the first amount of trapped PM and the second amount of trapped PM, by means of the ECU 6.

However, the factor in which the difference between the estimated differential pressure and the second actual differential pressure becomes equal to or greater than the predetermined threshold value is not limited to the abnormality of the exhaust system component, but is also considered to be the abnormality of the particulate filter. Accordingly, the abnormality determination processing in this embodiment should be carried out on condition that the particulate filter is normal. As a method of determining whether the particulate filter is normal, a PM sensor of electrode type can be mounted on the exhaust pipe 2 at the downstream side of the filter casing 4, wherein when the time required from the end of the processing to remove the PM deposited between the electrodes of the PM sensor until the electrodes thereof become electrically conductive (hereinafter, referred to as a "conduction time") is equal to or greater than a predetermined period of time, a determination is made that the particulate filter is normal, whereas when the conduction time is shorter than the predetermined period of time, a determination is made that the particulate filter is abnormal.

In the abnormality determination processing carried out by the method as mentioned described above, when it is determined that the exhaust system component is abnormal, the measured value of the differential pressure sensor 5 does not become a value reflecting the state of the particulate filter (e.g., the amount of trapped PM). For that reason, when the processing of obtaining the amount of trapped PM in the particulate filter by using the flow rate of the exhaust gas, the measured value of the differential pressure sensor 5, and the map or function expression shown in Fig. 2 is carried out, there is a possibility that an error or difference between the amount of trapped PM thus obtained and the actual amount of trapped PM becomes large. Accordingly, in this embodiment, when a determination is made that the exhaust system component is abnormal, the ECU 6 inhibits the obtaining of the amount of trapped PM based on the measured value of the differential pressure sensor 5 (i.e., a control unit according to the present disclosure).

In the following, an execution procedure of the abnormality determination processing in this embodiment will be described in line with Fig. 7. Here, reference will be made to the execution procedure when the first flow rate of the exhaust gas and the second flow rate of the exhaust gas are fixed in advance to the constant values, respectively. Fig. 7 is a flow chart showing a processing routine executed by the ECU 6, at the time of carrying out an abnormality determination of the exhaust system component. The processing routine shown in Fig. 7 has been beforehand stored in the ROM of the ECU 6, and is carried out in a repeated manner during the operation period of the internal combustion engine 1.

In the processing routine of Fig. 7, first in the processing of step S101, the ECU 6 determines whether the value of an abnormality determination flag is "0". The abnormality determination flag referred to herein is a storage area which is set in the backup RAM of the ECU 6, etc., wherein when a determination has been made that the exhaust system component is normal, "0" is written in the flag, whereas when a determination is made that the exhaust system component is abnormal, "1" is written therein. When a negative determination is made in the processing of step S101 (the abnormality determination flag = 1), the ECU 6 resets the values of various data (a first actual differential pressure Dpbase, a first atmospheric pressure Ap1 and a first amount of trapped PM ΣPM1 to be described later) stored in the RAM in the processing of step S115, and ends the execution of this processing routine. On the other hand, when an affirmative determination is made in the processing of step S101 (the abnormality determination flag = 0), the routine of the ECU 6 goes to the processing of step S102.

In the processing of step S102, the ECU 6 determines whether an execution condition of the abnormality determination processing is satisfied. The execution condition referred to herein is that the particulate filter is normal. The determination as to whether the particulate filter is normal is carried out by determining whether the conduction time of the PM sensor of electrode type mounted on the exhaust pipe 2 at the downstream side of the filter casing 4 is equal to or greater than the predetermined period of time, as described above. When a negative determination is made in the processing of step S102, the ECU 6 carries out the processing of step S115, and ends the execution of this processing routine. On the other hand, when an affirmative determination is made in the processing of step S102, the routine of the ECU 6 goes to the processing of step S103.

In the processing of S103, the ECU 6 determines whether the flow rate of the exhaust gas is equal to the first flow rate Of1 which has been set in advance. When a negative determination is made in step S103, the ECU 6 carries out the processing of the step S103 in a repeated manner. On the other hand, when an affirmative determination is made in the processing of step S103, the routine of the ECU 6 goes to the processing of step S104.

In the processing of step S104, the ECU 6 reads in the measured value (the first actual differential pressure) Dpbase of the differential pressure sensor 5, the measured value (the first atmospheric pressure) Ap1 of the atmospheric pressure sensor 10, and the estimated value (the first amount of trapped PM) Σ PM1 of the amount of trapped PM in the particulate filter, and stores those data into a storage device such as the RAM.

In the processing of S105, the ECU 6 determines whether the flow rate of the exhaust gas is equal to the second flow rate Of2 which has been set in advance. When a negative determination is made in the processing of step S105, the ECU 6 carries out the processing of the step S105 in a repeated manner. On the other hand, when an affirmative determination is made in the processing of step S105, the routine of the ECU 6 goes to the processing of step S106. Here, note that when the operation of the internal combustion engine 1 is stopped in the course of the ECU 6 carrying out the processing of step S105 in a repeated manner, the ECU 6 resets the values of various data (the first actual differential pressure Dpbase, the first atmospheric pressure Ap1 and the first amount of trapped PM ΣPM1) stored in the RAM, and ends the execution of this processing routine.

In the processing of step S106, the ECU 6 reads in the measured value (the second actual differential pressure) Dpact of the differential pressure sensor 5, the measured value (the second atmospheric pressure) Ap2 of the atmospheric pressure sensor 10, and the estimated value (the second amount of trapped PM) ΣPM2 of the amount of trapped PM in the particulate filter. Here, note that the processing of the above-mentioned step S104 and the above-mentioned step S105 may be carried out before the processing of the above-mentioned step S103 and the above-mentioned step S104, respectively.

In the processing of step S107, the ECU 6 calculates an estimated value (estimated differential pressure) Dpest of the differential pressure assuming that the flow rate of the exhaust gas is equal to the second flow rate of the exhaust gas, and that the exhaust system component is normal. Specifically, as described above, the ECU 6 first calculates the amount of trapped PM by accessing the map or function expression shown in Fig. 2 with the use of the first flow rate of the exhaust gas and the first actual differential pressure Dpbase as arguments, and then calculates the estimated value of the differential pressure at the second flow rate of the exhaust gas by accessing the map or function expression in Fig. 2 with the use of the amount of trapped PM and the second flow rate of the exhaust gas as arguments. Moreover, the ECU 6 obtains the estimated differential pressure Dpest by correcting the estimated value based on a difference between the first atmospheric pressure Ap1 and the second atmospheric pressure Ap2 (atmospheric pressure difference), and a difference between the first amount of trapped PM ΣPM1 and the second amount of trapped PM ΣPM2.

In the processing of step S108, the ECU 6 determines whether a difference (|Dpest - Dpact|) between the second actual differential pressure Dpact read in by the above-mentioned processing of step S106 and the estimated differential pressure Dpest obtained by the above-mentioned processing of step S107 is equal to or greater than a predetermined threshold value Δ Dpthr. When a negative determination is made in the above-mentioned processing of step S108, the routine of the ECU 6 goes to the processing of step S113, and writes "0" in the abnormality determination flag. On the other hand, when an affirmative determination is made in the above-mentioned processing of step S108, the routine of the ECU 6 goes to the processing of step S109, and writes "1" in the abnormality determination flag.

After carrying out the above-mentioned processing of step S109, the routine of the ECU 6 goes to the processing of step S110, where it is determined whether the magnitude relation of the second flow rate Of2 of the exhaust gas with respect to the first flow rate Of1 of the exhaust gas and the magnitude relation of the second actual differential pressure Dpact with respect to the estimated differential pressure Dpest is equivalent to each other (i.e., whether the first flow rate Of1 of the exhaust gas is smaller than the second flow rate Of2 of the exhaust gas and the estimated differential pressure Dpest is smaller than the second actual differential pressure Dpact, or whether the first flow rate Of1 of the exhaust gas is larger than the second flow rate Of2 of the exhaust gas and the estimated differential pressure Dpest is larger than the second actual differential pressure Dpact). That is, in the processing of step S110, the ECU 6 determines whether the above-mentioned relations shown in Figs. 3 and 4 are satisfied. When an affirmative determination is made in the processing of step S110, the routine of the ECU 6 goes to the processing of step S111, where a determination is made that the abnormality of the exhaust system component is that the pressure loss therein is decreased. On the other hand, when a negative determination is made in the processing of step S110, the relations shown in the above-mentioned Figs. 5 and 6 are satisfied, and hence, the routine of the ECU 6 goes to the processing of step S112, where a determination is made that the abnormality of the exhaust system component is that the pressure loss therein is increased. Here, note that in the above-mentioned processing of steps S111 and S112, the ECU 6 may store the kind of the abnormality into the backup RAM or the like.

After ending the execution of the processing of step S111, S112 or S113, the routine of the ECU 6 goes to the processing of step S114, and resets the values of various data (the first actual differential pressure Dpbase, the first atmospheric pressure Ap1 and the first amount of trapped PM ΣPM1) stored in the RAM, and ends the execution of this processing routine. At that time, the ECU 6 should not reset the value of the abnormality determination flag.

Here, note that a "determination unit" according to the present disclosure is achieved by carrying out the processing of steps S108, S109 and S113 by means of the ECU 6.

As described above, when the abnormality determination processing of the exhaust system component is carried out according to the processing routine of Fig. 7, the abnormality of the exhaust system component can be determined by making use of the differential pressure sensor 5, so it is not necessary to separately arrange a device for detecting the abnormality of the exhaust system component. Accordingly, the abnormality of the exhaust system component can be determined, while suppressing an increase in the number of component parts as well as an increase in cost.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. An abnormality determination system for an exhaust device, the exhaust device including a particulate filter (4) that is disposed in an exhaust passage (2) of an internal combustion engine (1) for trapping particulate matter in exhaust gas, and a differential pressure obtaining unit (5) configured to obtain an actual differential pressure which is an actual difference between a pressure of the exhaust gas at the upstream side of the particulate filter (4) and an atmospheric pressure, wherein the abnormality determination system determines an abnormality of the exhaust device,
the abnormality determination system comprising:
a detection unit (6) configured to detect a flow rate of the exhaust gas passing through the particulate filter (4);
an estimation unit (6) configured to estimate, based on a first actual differential pressure which is an actual differential pressure obtained by the differential pressure obtaining unit (5) and a first flow rate of the exhaust gas which is a flow rate of the exhaust gas detected by the detection unit (6) when the first actual differential pressure is obtained, a differential pressure between a pressure of the exhaust gas at the upstream side of the particulate filter (4) and an atmospheric pressure when the flow rate of the exhaust gas passing through the particulate filter (4) is a second flow rate of the exhaust gas different from the first flow rate of the exhaust gas; and
a determination unit (6, S108, S109, S113) configured to determine that an exhaust system component disposed at the downstream side of the particulate filter (4) is abnormal when a difference between the differential pressure estimated by the estimation unit (6) and a second actual differential pressure, which is an actual differential pressure obtained by the differential pressure obtaining unit (5) when the flow rate of the exhaust gas detected by the detection unit (6) is equal to the second flow rate of the exhaust gas, is equal to or greater than a predetermined threshold value.

2. The abnormality determination system for an exhaust device as set forth in claim 1, further comprising:
an atmospheric pressure obtaining unit (10) configured to obtain an atmospheric pressure; and
a correction unit (6) configured to correct the differential pressure estimated by the estimation unit (6), based on an atmospheric pressure difference which is a difference between an atmospheric pressure obtained by the atmospheric pressure obtaining unit (10) when the first actual differential pressure is obtained and an atmospheric pressure obtained by the atmospheric pressure obtaining unit (10) when the second actual differential pressure is obtained;
wherein the determination unit (6, S108, S109, S113) determines that the exhaust system component is abnormal when the difference between the differential pressure after having been corrected by the correction unit (6) and the second actual differential pressure is equal to or greater than the predetermined threshold value.

3. The abnormality determination system for an exhaust device as set forth in claim 2, further comprising:
a calculation unit (6) configured to calculate, based on an operation history of the internal combustion engine, a difference between an amount of trapped PM in the particulate filter (4) at the time when the first actual differential pressure is obtained and an amount of trapped PM in the particulate filter (4) at the time when the second actual differential pressure is obtained,
wherein the correction unit (6) corrects the differential pressure estimated by the estimation unit (6) based on the atmospheric pressure difference and the difference between the amounts of trapped PM calculated by the calculation unit (6); and
wherein the determination unit (6, S108, S109, S113) makes a determination that the exhaust system component is abnormal when the difference between the differential pressure after having been corrected by the correction unit (6) and the second actual differential pressure is equal to or greater than the predetermined threshold value.

4. The abnormality determination system for an exhaust device in any one of claims 1 through 3, wherein
when a difference between the differential pressure estimated by the estimation unit (6) and the second actual differential pressure is equal to or greater than the predetermined threshold value,
the determination unit (6, S108, S109, S113) determines that an abnormality in which a pressure loss of the exhaust system component decreases has occurred when the first flow rate of the exhaust gas is larger than the second flow rate of the exhaust gas and when the estimated differential pressure is larger than the second actual differential pressure, or when the first flow rate of the exhaust gas is smaller than the second flow rate of the exhaust gas and when the estimated differential pressure is smaller than the second actual differential pressure; and
the determination unit (6, S108, S109, S113) determines that an abnormality in which a pressure loss of the exhaust system component increases has occurred when the first flow rate of the exhaust gas is larger than the second flow rate of the exhaust gas and when the estimated differential pressure is smaller than the second actual differential pressure, or when the first flow rate of the exhaust gas is smaller than the second flow rate of the exhaust gas and when the estimated differential pressure is larger than the second actual differential pressure.

5. The abnormality determination system for an exhaust device in any one of claims 1 through 4, further comprising:
a trapped PM amount obtaining unit (6) configured to obtain an amount of trapped PM in the particulate filter (4), by using as a parameter the actual differential pressure obtained by the differential pressure obtaining unit (5); and
a control unit (6) configured to inhibit the obtaining of the amount of trapped PM by the trapped PM amount obtaining unit (6), when a determination has been made by the determination unit (6, S108, S109, S113) that the exhaust system component is abnormal.
